# EUROPEAN PATENT SPECIFICATION

(11) **EP 3 639 182 B1**
(45) Date of publication and mention of the grant of the patent: **24.07.2024**
(21) Application number: 19738347.4
(22) Date of filing: 29.04.2019
(51) Int. Cl.: G06F 21/60, G06F 21/64

(54) **METHODS AND DEVICES FOR VALIDATING TRANSACTION IN BLOCKCHAIN SYSTEM**
VERFAHREN UND VORRICHTUNGEN ZUR VALIDIERUNG VON TRANSAKTIONEN IN EINEM BLOCKCHAIN-SYSTEM
PROCÉDÉS ET DISPOSITIFS POUR VALIDER UNE TRANSACTION DANS UN SYSTÈME À CHAÎNE DE BLOCS

(43) Date of publication of application: 22.04.2020
(73) Proprietor: Advanced New Technologies Co., Ltd., George Town, Grand Cayman KY1-9008 (KY)
(72) Inventor: LI, Yanpeng, Hangzhou, Zhejiang 311121 (CN)
(74) Representative: Finnegan Europe LLP
(86) International application number: PCT/CN2019/084941
(87) International publication number: WO 2019/137566

(56) References cited:
- WO-A1-2018/189658
- CN-A- 108 632 045
- CN-A- 108 712 263
- CN-A- 109 635 572
- US-A1- 2019 035 014
- GUY GOLAN GUETA ET AL: "SBFT: A Scalable and Decentralized Trust Infrastructure", 2 January 2019 (2019-01-02), XP055769679, Retrieved from the Internet <URL:https://arxiv.org/pdf/1804.01626.pdf> [retrieved on 20210128]
- ANONYMOUS: "BLS Digital Signature - Wikipedia", 21 February 2019 (2019-02-21), XP055769680, Retrieved from the Internet <URL:https://en.wikipedia.org/w/index.php?title=BLS_digital_signature&oldid=884373568> [retrieved on 20210128]
- STEVE ELLIS ET AL: "A Decentralized Oracle Network", 4 September 2017 (2017-09-04), XP055479842, Retrieved from the Internet <URL:https://link.smartcontract.com/whitepaper>

## Description

### TECHNICAL FIELD

The specification relates generally to computer technologies, and more particularly, to methods and devices for validating a transaction in a blockchain system.

### BACKGROUND

Blockchain systems, also known as distributed ledger systems (DLSs) or consensus systems, may enable participating entities to store data securely and immutably. Blockchain systems may include any DLSs, without referencing any particular use case, and may be used for public, private, and consortium blockchain networks. A public blockchain network is open for all entities to use the system and participate in the consensus process. A private blockchain network is provided for a particular entity, which centrally controls read and write permissions. A consortium blockchain network is provided for a select group of entities, which control the consensus process, and includes an access control layer.

A blockchain system maintains one or more blockchains. A blockchain is a data structure for storing data, such as transactions, that may prevent tampering and manipulation of the data by malicious parties.

Traditionally, a transaction may be validated by approval from multiple parties. For example, a corporate check may need two or more signatures from different divisions of a corporation, a contract may need two or more contracting parties to execute, etc. An administrator or a central entity may collect signatures from the multiple parties, manually or electrically, and may further provide the signatures to a blockchain system for verification.

Non-patent document XP055769679, titled "SBFT: A Scalable and Decentralized Trust Infrastructure", by Guy Golan Gueta et al., is regarded as relevant prior art.

### SUMMARY

In one embodiment, there is provided a computer-implemented method for validating a transaction in a blockchain system, the method comprising: verifying a first partial signature for the transaction; verifying a second partial signature for the transaction; and validating the transaction in response to a determination that a cumulative signature score based on the first partial signature and the second partial signature reaches a signature threshold.

In another embodiment, there is provided a computer-implemented method for validating a transaction in a blockchain system, the method comprising: providing a partial signature for the transaction; broadcasting the partial signature in the blockchain system; verifying the partial signature for the transaction; and validating the transaction in response to a determination that a cumulative signature score based on the partial signature reaches a signature threshold.

In another embodiment, there is provided a device for validating a transaction in a blockchain system, comprising: one or more processors; and one or more computer-readable memories coupled to the one or more processors and having instructions stored thereon, wherein the instructions are executable by the one or more processors to perform the above methods.

In another embodiment, there is provided a non-transitory computer-readable medium having stored therein instructions that, when executed by a processor of a device, cause the device to perform the above methods to validate a transaction in a blockchain system.

### BRIEF DESCRIPTION OF THE DRAWINGS

The accompanying drawings, which are incorporated in and constitute a part of this specification, illustrate embodiments. In the following description, which refers to the drawings, the same numbers in different drawings represent the same or similar elements unless otherwise represented.
FIG. 1 is a schematic diagram of a blockchain system, according to an embodiment.
FIG. 2 is a schematic diagram of a method for validating a transaction in a blockchain system, according to an embodiment.
FIG. 3 is a flow chart of a method for validating a transaction in a blockchain system, according an embodiment.
FIG. 4 is a flow chart of a method for providing a partial signature by a node in a blockchain system, according an embodiment.
FIG. 5 is a flow chart of a method for verifying a partial signature in a blockchain system, according an embodiment.
FIG. 6 is a schematic diagram of a device for validating a transaction in a blockchain system, according to an embodiment.
FIG. 7 is a schematic diagram of an apparatus for validating a transaction in a blockchain system, according to an embodiment.

### DETAILED DESCRIPTION

Embodiments of the specification provide methods and devices for validating a transaction in a blockchain system. Based on consensus, each of a plurality of nodes in the blockchain system may provide a partial signature for the transaction using a private key, and other nodes in the consensus group may verify the partial signature using a public key paired with the private key. The signing-verifying process may be continued until a cumulative signature score reaches a signature threshold.

Embodiments disclosed in the specification have one or more technical effects. In some embodiments, the methods and devices provide a plurality of nodes in a blockchain system with the ability to provide their respective partial signatures for a transaction. This eliminates the need for an administrator or a central intermediary, thereby enhancing security and efficiency of the transaction, and reducing a cost of the transaction. In other embodiments, the methods and devices iterate the operations of providing a partial signature for the transaction by a node, broadcasting the partial signature by the node, and verifying the partial signature by one or more other nodes, until a cumulative signature score reaches a signature threshold. This allows for the transaction to be validated as soon as the cumulative signature score reaches the signature threshold, thereby speeding up the validation process and avoiding extra validation that may not be needed. In still other embodiments, each node of the plurality of nodes has its own private key for generating its partial signature for the transaction, without revealing the private key to other nodes. This allows for further enhancing security of the transaction. In still other embodiments, the methods and devices may dynamically remove an inoperative node and admit a new node. This allows for preservation of the integrity of the transaction. In still other embodiments, multiple nodes provide their partial signatures in parallel or substantially at the same time. This allows for removal of sequentially signing or approving a transaction by multiple parties, leading to enhanced flexibility and efficiency of the transaction validation process.

The following description provides details of embodiments. In the embodiments, a blockchain is a data structure that stores data, e.g., transactions, in a way that the transactions may be immutable and subsequently verified. A blockchain includes one or more blocks. Each block is linked to a previous block immediately before it in the blockchain by including a cryptographic hash of the previous block. Each block also may include a timestamp, its own cryptographic hash, and one or more transactions. The transactions, which generally have already been verified by the nodes of the blockchain system, may be hashed and encoded into a data structure, such as a Merkle tree. In a Merkle tree, data at leaf nodes of the tree is hashed, and all hashes in each branch of the tree may be concatenated at a root of the branch. This process continues up the tree to the root of the entire tree, which stores a hash that is representative of all data in the tree. A hash purporting to be of a transaction stored in the tree can be quickly verified by determining whether it is consistent with the structure of the tree.

A blockchain system includes a network of computing nodes that manage, update, and maintain one or more blockchains. The network may be a public blockchain network, a private blockchain network, or a consortium blockchain network. In a public blockchain network, the consensus process is controlled by nodes of the consensus network. For example, numerous entities, such as hundreds, thousands, or even millions of entities, can operate in a public blockchain network, and each of the entities operates at least one node in the public blockchain network. Accordingly, the public blockchain network can be considered a public network with respect to the participating entities. Sometimes, a majority of entities (nodes) must sign every block in order for the block to be valid, and added to the blockchain of the blockchain network. Examples of public blockchain networks include particular peer-to-peer payment networks that leverage a distributed ledger, referred to as blockchain.

In general, a public blockchain network may support public transactions. A public transaction is shared with all of the nodes in the public blockchain network, and is stored in a global blockchain. A global blockchain is a blockchain replicated across all nodes, and all nodes are in perfect state consensus with respect to the global blockchain. To achieve consensus (e.g., agreement to the addition of a block to a blockchain), a consensus protocol is implemented in the public blockchain network. Examples of consensus protocols include proof-of-work (POW) (e.g., implemented in the some crypto-currency networks), proof-of-stake (POS), and proof-of-authority (POA).

In general, a private blockchain network may be provided for a particular entity, which centrally controls read and write permissions. The entity controls which nodes are able to participate in the blockchain network. Consequently, private blockchain networks are generally referred to as permissioned networks that place restrictions on who is allowed to participate in the network, and on their level of participation (e.g., only in certain transactions). Various types of access control mechanisms can be used (e.g., existing participants vote on adding new entities, a regulatory authority can control admission).

In general, a consortium blockchain network may be private among the participating entities. In a consortium blockchain network, the consensus process is controlled by an authorized set of nodes, one or more nodes being operated by a respective entity (e.g., a financial institution, insurance company). For example, a consortium of ten (10) entities (e.g., financial institutions, insurance companies) can operate a consortium blockchain network, each of which operates at least one node in the consortium blockchain network. Accordingly, the consortium blockchain network can be considered a private network with respect to the participating entities. In some examples, each entity (node) must sign every block in order for the block to be valid and added to the blockchain. In some examples, at least a sub-set of entities (nodes) (e.g., at least 7 entities) must sign every block in order for the block to be valid and added to the blockchain.

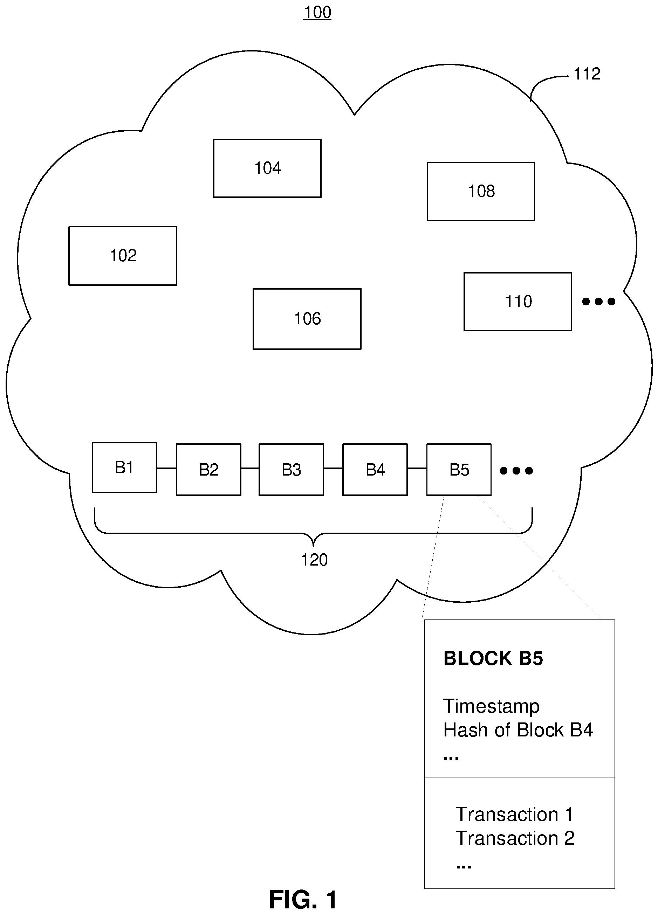

FIG. 1 illustrates a schematic diagram of a blockchain system 100, according to an embodiment. Referring to FIG. 1, the blockchain system 100 may include a plurality of nodes, e.g., nodes 102-110, configured to operate on a blockchain 120. The nodes 102-110 may form a network 112, such as a peer-to-peer (P2P) network. Each of the nodes 102-110 may be a computing device, such as a computer or a computer system, configured to store a copy of the blockchain 120, or may be software running on the computing device, such as a process or an application. Each of the nodes 102-110 may have a unique identifier. The nodes 102-110 may communicate with one another by a wired or wireless communication. Such communication may adopt a reliable protocol such as a Transmission Control Protocol/Internet Protocol (TCP/IP).

The blockchain 120 may include a growing list of records in the form of data blocks, such as blocks B1-B5 in FIG. 1. Each of the blocks B1-B5 may include a timestamp, a cryptographic hash of a previous block, and data of the present block, which may be transactions such as monetary transactions. For example, as illustrated in FIG. 1, block B5 may include a timestamp, a cryptographic hash of block B4, and transaction data of block B5. Also, for example, a hashing operation may be performed on the previous block to generate the cryptographic hash of the previous block. The hashing operation may convert inputs of various lengths into cryptographic outputs of a fixed length through a hash algorithm, such as SHA-256.

The nodes 102-110 may be configured to perform an operation on the blockchain 120. For example, when a node, e.g., the node 102, wants to store new data onto the blockchain 120, that node may generate a new block to be added to the blockchain 120 and broadcast the new block to other nodes, e.g., the nodes 104-110, in the network 112. Based on legitimacy of the new block, e.g., validity of its signature and transactions, the other nodes may determine to accept the new block, such that the node 102 and the other nodes may add the new block to their respective copies of the blockchain 120. As this process repeats, more and more blocks of data may be added to the blockchain 120.

In an embodiment, the blockchain system 100 may operate according to one or more smart contracts. Each smart contract may be a computer protocol in the form of computer code that is incorporated into the blockchain 120, to facilitate, verify, or enforce the negotiation or performance of a contract. For example, a user of the blockchain system 100 may program agreed terms into a smart contract using a programming language, such as C++, Java, Solidity, Python, etc., and when the terms are met, the smart contract may be automatically executed by the blockchain system 100, e.g., to perform a transaction. Also, for example, the smart contract may include a plurality of subroutines or functions, each of which may be a sequence of program instructions that performs a specific task. The smart contract may be operational code that is fully or partially executed without human interaction.

In an embodiment, transactions may be authenticated in the blockchain system 100 based on a cryptography algorithm. The cryptography algorithm may provide a pair of keys including a private key and a public key. The private key may be associated with a particular user and may encrypt data representing a transaction, e.g., initiated by the user. The encryption of the data representing the transaction may also be referred to as signing the transaction. The public key may be provided to another user in the blockchain system 100 to decrypt the encrypted data, to verify whether the transaction is indeed authorized by that particular user. The decryption may also be referred to as signature verification. In the embodiment, the blockchain system 100 may support a plurality of cryptography algorithms, such as an RSA (Rivest-Shamir-Adleman) algorithm, an Elliptic Curve Digital Signature Algorithm (ECDSA), an SM2 algorithm, and the like.

In an embodiment, multi-signature may be performed on a transaction in the blockchain system 100. The multi-signature is a technique which allows a group of users to sign the same transaction.

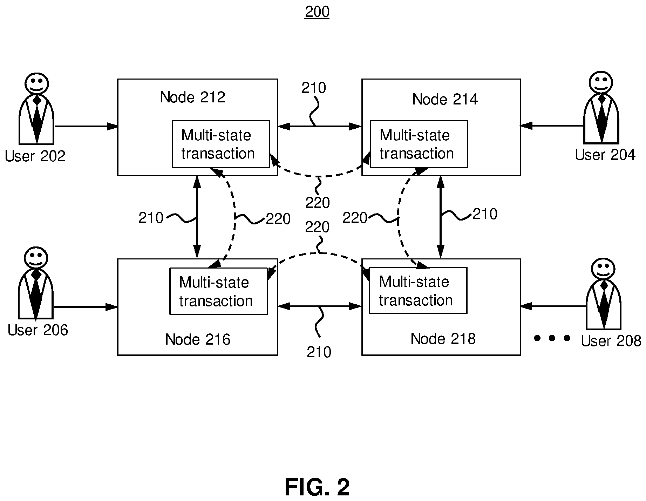

FIG. 2 is a schematic diagram illustrating a method 200 for validating a transaction in a blockchain system, such as the blockchain system 100 (FIG. 1), according to an embodiment. The blockchain system includes a plurality of nodes, such as nodes 212, 214, 216, and 218, which operate similarly to the nodes in the blockchain system 100.

Referring to FIG. 2, the blockchain system may have a plurality of users, e.g., users 202, 204, 206, and 208, using the nodes 212, 214, 216, and 218 of the blockchain system, respectively. The users 202-208 may be authorized to provide their partial signatures on a transaction, and may also be referred to as signature authorities. A partial signature may be a signature that each of the signature authorities can provide, indicating authorization of the transaction by a particular signature authority providing the partial signature. For illustrative purposes only, it is assumed that the users 202, 204, 206, and 208 use the nodes 212, 214, 216, and 218, respectively, in this embodiment, but the method 200 is not so limited. For example, more than one, or all, of the users 202, 204, 206, and 208 may use a same node, such as the node 212 or 214, of the blockchain system. Also for example, in addition to the user 202 shown in FIG. 2, additional users may use the node 212. As another example, a user using a node may provide a partial signature through that node or a user terminal communicating with that node. In some embodiments, the users 202-208 may be related to each other, for example, they are directors of different divisions of the same organization. In some embodiments, the users 202-208 may be unrelated from each other, for example, the user 202 may be a representative of a company based in the United States, the user 204 may be a representative of a university in Japan, the user 206 may be a representative of a research institution in China, and the user 208 may be a government official of Germany. A required number of signature authorities may depend on characteristics of the transaction. In general, having more signature authorities may reflect greater confidence in the validity of the transaction.

The transaction may be any transaction that requires partial signatures from multiple users. For example, the transaction may be a money transfer, an asset transfer, an execution of a smart contract, a modification of a smart contract, etc.

In an embodiment, the transaction may have multiple states and may be referred to as a multi-state transaction. A multi-state transaction may be a transaction that requires multiple steps or multiple users to perform. In the embodiment illustrated in FIG. 2, the multi-state transaction is a multi-signature transaction that requires multiple signature authorities to provide their partial signatures. Each signature authority may perform a signing operation on the transaction to provide a partial signature. In some embodiments, the operations of the signature authorities may be recorded in a transaction history.

In an embodiment, the users 202, 204, 206, and 208 and, thus, the nodes 212, 214, 216, and 218 may form a consensus group aimed to cooperatively perform multi-signature on the transaction. The consensus group may be a permissioned group that, e.g., only nodes having signature authority can join, thereby ensuring security of the transaction. The consensus group may be initialized by a user initiating the transaction, or by a user having signature authority, or by a creator of the blockchain system, or a smart contract. The nodes 212-218 of the consensus group may be interconnected to one another using a protocol 210. The protocol 210 may be a secure cryptographic protocol such as a Transport Layer Security/Secure Sockets Layer (TLS/SSL) protocol, or any currently known or future-developed protocol that can provide privacy and data integrity during communication. It is to be understood that, although FIG. 2 shows interconnections between the nodes 212 and 214, between the nodes 214 and 218, between the nodes 216 and 218, and between the nodes 212 and 216, it is for illustrative purpose only. An interconnection may be established between each node and any of the remaining nodes in the blockchain system.

In an embodiment, as a member of the consensus group, each node may agree to perform its portion of the multi-state transaction so that the group members can cooperatively verify the transaction. For example, each node may agree to provide a partial signature, to verify partial signatures provided by other nodes, and to validate the transaction if a signature threshold for the transaction is satisfied. In some embodiments, each of the nodes 212-218 may perform operations such as generating a partial signature, and broadcasting the partial signature to the blockchain system such that other nodes of the consensus group can verify the partial signature based on a consensus algorithm 220. In some embodiments, each of the nodes 212-218 may receive a partial signature generated by a user terminal, to provide the partial signature. If a cumulative signature score based on the partial signatures reaches a signature threshold, the multi-signature is completed for the transaction, and the transaction is validated. For example, the cumulative signature score may be obtained by determining a current sum of weightage values corresponding to partial signatures that have been verified, or a current number of the partial signatures that have been verified. In the embodiment, the consensus algorithm 220 may be any of Practical Byzantine Fault Tolerance (PBFT), Honey Badger, Proof Of Work (POW), Proof-Of-Stake (POS), Delegate Certificate Of Interest (DCOI), or Greedy Heaviest Observed Subtree (GHOST). It is to be understood that, although FIG. 2 shows that consensus is reached between the nodes 212 and 214, between the nodes 214 and 218, between the nodes 216 and 218, and between the nodes 212 and 216, it is for illustrative purpose only. Consensus may be reached between each node and any of the remaining nodes in the blockchain system.

In an embodiment, the transaction may be initiated by a node broadcasting a transaction request. For example, in the embodiment illustrated in FIG. 2, the node 212 corresponding to the user 202 may initiate a transaction by broadcasting a transaction request in the blockchain system, and the transaction request may include transaction data. In some embodiments, the user 202 is an initiator of the transaction but is not a signature authority. In other embodiments, the user 102 is an initiator of the transaction and is also a signature authority. Accordingly, the transaction request may include a partial signature for the transaction by the node 212. For illustrative purpose only, it is assumed that the transaction request does not include a partial signature by the node 212 in the illustrated embodiment.

In an embodiment, upon receiving the transaction request, each of the nodes 214, 216, and 218 may perform their respective partial signatures on the transaction. For example, the consensus group may adopt a private/public key encryption/decryption algorithm, such as the RSA algorithm, and each node of the consensus group has its own private key. In some embodiments, the private key may be generated at the node itself without revealing the information to any other nodes, enhancing security of the transaction. The private key may be a secure random number generated at the node, or any secret number known to the node only. The node 214 may generate a hash value for the transaction using a hashing function, and encrypt the hash value using its private key to generate its partial signature for the transaction. The node 214 may then broadcast its partial signature to the blockchain system so that other nodes of the consensus group can also sign the transaction.

In an embodiment, for each private key, there is a corresponding public key paired with the private key. The public key is open to all the nodes of the consensus group. In some embodiments, the public key may be registered in a blockchain or provided to the other nodes of the consensus group in advance. In some embodiments, the public key may be sent to the other nodes of the group along with a signature.

In an embodiment, upon receipt of the partial signature transmitted from the node 214, other nodes of the consensus group may verify validity of the partial signature of the node 214. For example, each of the nodes 212, 216, and 218 may decrypt the received partial signature using a public key that is paired with the private key of the node 214 to obtain a first hash value. Further, each the nodes 212, 216, and 218 may, by itself, generate a second hash value for the transaction. If all or a majority of the nodes 212, 216, and 218 determine that the first hash value obtained from the decryption matches the generated second hash value, the partial signature of the node 214 is verified. Otherwise, the partial signature of node 214 is determined to be invalid.

In an embodiment, the node 216 may also provide its partial signature for the transaction. Similar to the node 214, the node 216 may generate a partial signature for the transaction using, e.g., the RSA algorithm, by generating a hash value for the transaction, and encrypting the hash value using its private key. The node 216 may then broadcast its partial signature to other nodes of the consensus group for verification.

In an embodiment, upon receipt of the partial signature transmitted from the node 216, other nodes of the consensus group may verify validity of the partial signature of the node 216. For example, each of the nodes 212, 214, and 218 may decrypt the received partial signature using a public key that is paired with the private key of the node 216 and obtain a first hash value. Further, each of the nodes 212, 214, and 218 may generate a second hash value for the transaction. If all or a majority of the nodes 212, 214, and 218 determine that the first hash value obtained from the decryption matches the generated second hash value, the partial signature of the node 216 is verified. Such a process of signing-verifying may be iterated within the nodes of the consensus group until a cumulative signature score reaches a signature threshold.

In one embodiment, the cumulative signature score based on the partial signatures of the nodes 214 and 216 may reach the signature threshold and, thus, the transaction is validated based on two partial signatures. In another embodiment, additional partial signatures may be needed for the cumulative signature score to reach the signature threshold to validate the transaction.

The signature threshold may be a predetermined weightage value or a predetermined number of partial signatures, required for completing multi-signature. In some embodiments, the signature threshold may be expressed as a percentage value. For example, a signature threshold 100% indicates that all signature authorities are required to provide their partial signatures to complete multi-signature for the transaction. The signature threshold may be determined by consensus among signature authorities, or by an authority in the consensus group who has the right to determine the signature threshold, or by a creator of the blockchain system. In general, a greater signature threshold results in greater confidence in the validity of the transaction.

In an embodiment, a respective weightage value may be assigned to each of the users (thus the nodes) of the consensus group. The weightage value may indicate a given signature authority's importance or contribution to the validation of the transaction. For example, in the embodiment illustrated in FIG. 2, weightage values of 10%, 50%, 30%, and 10% may be assigned to the users 202, 204, 206, and 208, respectively, and thus, the nodes 212, 214, 216, and 218, respectively, indicating the partial signature of the node 214 has a largest contribution in validating the transaction. The weightage values associated with the signature authorities may be determined by consensus among the signature authorities, or by an authority in the consensus group who has the right to assign weightage values, or by a creator of blockchain system.

In the embodiment illustrated in FIG. 2, if a weightage value assigned to the node 214 is 50% and a signature threshold is 90%, after verification of the partial signature of the node 214, the transaction is not yet validated. Thus, a second partial signature follows. For example, the node 216 may provide its partial signature for the transaction. If a weightage value assigned to the node 216 is 30%, after verification of the partial signature of the node 216, the cumulative signature score is 80%, still smaller than the signature threshold of 90%, and thus, the transaction is still not yet validated. Thus, a third partial signature follows. For example, the node 218 may provide its partial signature. If a weightage value assigned to the node 218 is 10%, the cumulative signature score is 90%, reaches the signature threshold of 90%, and thus, multi-signature is completed by the multiple users and the transaction is valid and considered enforceable.

In an embodiment, if the consensus group found that a signature authority committed forgery (e.g., providing a false entity in signing) and, thus, the corresponding node is an inoperative node, remaining nodes may remove, by consensus, the inoperative node from the network, permanently or temporarily, and remove the partial signature provided by the inoperative node. Further, by consensus, the remaining signature authorities may approve joining of a new signature authority. By dynamically removing an inoperative node from the group and admitting a new node in the group, the integrity of the transaction may be preserved.

The above embodiments provide a method for performing multi-signature on a transaction in a blockchain system. Based on consensus, each of the nodes may provide a partial signature on the transaction using a private key, and other nodes in the consensus group may verify the partial signature using a public key paired with the private key. The signing-verifying process may be continued until a cumulative signature score reaches a signature threshold, and therefore, multi-signature may be performed on the transaction without the involvement of an administrator or a central entity. Accordingly, the embodiments may eliminate the need for a central intermediary, thereby enhancing security and efficiency of the transaction, and reducing the cost of the transaction.

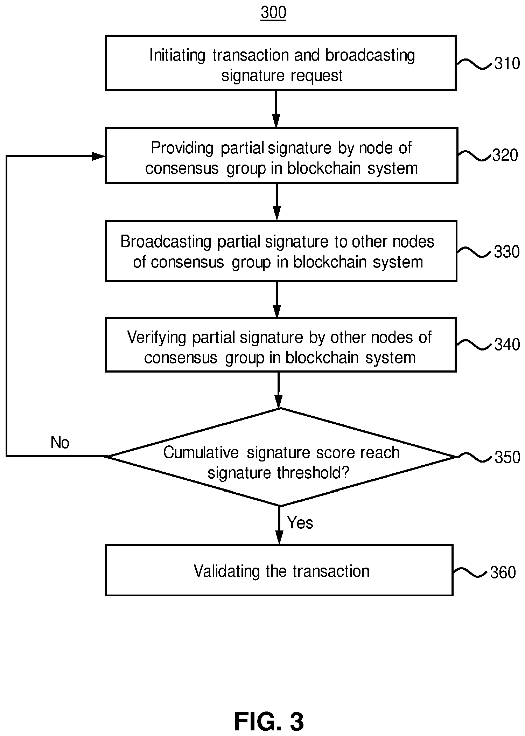

FIG. 3 is a flow chart of a method 300 for validating a transaction in a blockchain system, according an embodiment. Referring to FIG. 3, in step 310, a transaction is initiated and a request for signature is broadcasted to all users having signature authority, such as the users 202-208 of FIG. 2. Each of the users may use a node in the blockchain system, such as the nodes 212-218 of FIG. 2, and the users may form a consensus group aimed to cooperatively perform multi-signature on the transaction. In some embodiments, more than one, or all, of the users may provide their partial signatures through the same node in the blockchain system. The transaction may be initiated and broadcasted by a node corresponding to a user in the consensus group, or corresponding to a user not in the consensus group. The transaction may be any transaction or electronic documents that require multiple partial signatures from multiple users.

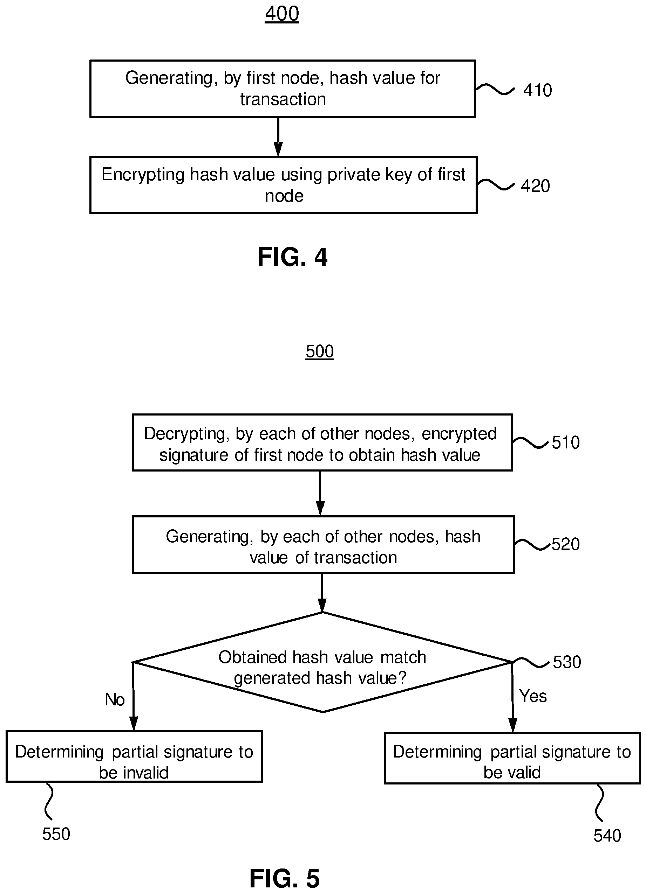

In step 320, a partial signature for the transaction is provided by a node of the consensus group, such as the node 212 in FIG. 2. A sequence of providing partial signatures may be determined by consensus among the nodes. In some embodiments, the partial signature may be provided based on the method illustrated in FIG. 4.

References are made to FIG. 4, a flow chart of a method 400 for providing a partial signature by a node in a blockchain system, according to an embodiment. As shown in FIG. 4, in step 410, a hash value for a transaction is generated by a first node of a consensus group, such as the node 212 in FIG. 2. In step 420, the generated hash value is encrypted using a private key of the node to generate a partial signature. The private key may be the node's secret key, and information of the key is not revealed to other nodes of the consensus group. The private key may be paired with a public key, and the public key is open to other nodes in the consensus group.

Now referring back to FIG. 3, once the partial signature is generated, in step 330, the partial signature is broadcasted to all other nodes of the consensus group in the blockchain system. This broadcasting may use a secure communication protocol such as the TLS/SSL protocol.

In step 340, the broadcasted partial signature is verified by other nodes of the consensus group, such as the nodes 214, 216, and 218 in FIG. 2, in the blockchain system. In some embodiments, the partial signature may be verified by the method as shown in FIG. 5.

References are made to FIG. 5, a flow chart of a method 500 for verifying a partial signature by multiple nodes of a consensus group in a blockchain system, according to an embodiment. As shown in FIG. 5, in step 510, the partial signature broadcasted from a first node is decrypted by other nodes of the consensus group and a hash value is obtained. In some embodiments, a plurality of signature authorities may use the first node, and the partial signature broadcasted from the first node that is provided by one of the plurality of signature authorities may also be decrypted by the first node. The decryption may be performed by using a public key that is paired with the private key of the first node.

Further, in step 520, a hash value is generated by each of the other nodes of the consensus group using a hash function. In step 530, the hash value obtained in step 510 is compared with the hash value generated in step 520. If the obtained hash value matches the generated hash value, in step 540, the partial signature of the first node is determined to be valid. Otherwise, in step 550, the partial signature of the first node is determined to be invalid. In an embodiment, if all or a majority of the other nodes determine the partial signature of the first node is valid, the partial signature of the first node may be validated. In some embodiments, based on consensus, the invalidated signature may be removed from the blockchain system and the node provided the invalid partial signature may be terminated or replaced by a new node.

Now referring back to FIG. 3, in step 350, a cumulative signature score is compared with a signature threshold. The cumulative signature score may be determined based on a weightage value assigned to each node of the consensus group. The signature threshold may be determined by consensus, in consideration of the characteristics of the transaction and the signing users.

If the cumulative signature score is equal to or greater than the signature threshold, in step 360, the multi-signature is completed for the transaction, and the transaction is validated and considered enforceable. On the other hand, if the cumulative signature score is smaller than the signature threshold, more partial signatures are collected. For example, the steps 320-350 of providing a partial signature, broadcasting the partial signature, verifying the partial signature and comparing an updated cumulative signature score with the signature threshold may be iterated until the cumulative signature score is equal to or greater than the signature threshold.

In signing and verifying the partial signatures, the above embodiments use encryption and decryption of the hash value of the transaction. However, the method is not so limited. In some embodiments, instead of hash values, any strings or IDs that can identify the transaction uniquely in the blockchain system may be used. Such an identification strings may be generated by any currently known functions or future developed functions.

In the above embodiments, multiple users of the consensus group provide their partial signatures in series, for example, the multiple users sequentially generate their partial signatures. However, the signing process is not so limited. The multiple users may provide their partial signatures in parallel. For example, the multiple users may generate their partial signatures at the same time. This removes the order of signing, leading to enhanced flexibility and efficiency of the process.

It is to be understood that the above-described disclosed methods may be utilized in various types of blockchain networks, such as a public blockchain network, a private blockchain network, or a consortium blockchain network.

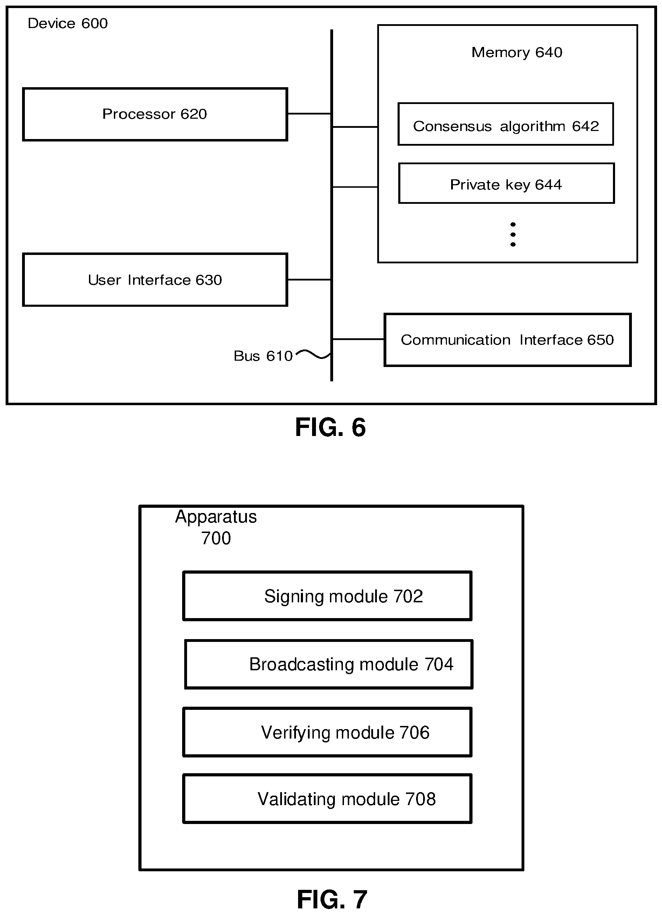

FIG. 6 is a schematic diagram of a device 600 for validating a transaction in a blockchain system, according to an embodiment. For example, the device 600 may operate as a node, such as the node 102 of FIG. 1, in a blockchain system. The device 600 may take any forms, including but not limited to, a desktop computer, a laptop computer, a server computer, a tablet, a smartphone, or a smart watch, or any other forms. Referring to FIG. 6, the device 600 may include a processor 620, a user interface 630, a memory 640, and a communication interface 650 that are communicate with one another through a bus 610.

The processor 620 may include one or more dedicated processing units, application-specific integrated circuits (ASICs), field-programmable gate arrays (FPGAs), or various other types of processors or processing units. The processor 620 is coupled with the memory 640 and is configured to execute instructions stored in the memory 640.

The communication interface 650 may facilitate communications between the device 600 and devices implemented by other nodes, such as the nodes 102-108 (FIG. 1), in the blockchain system. In some embodiments, the communication interface 650 may support one or more communication standards, such as an Internet standard or protocol including the TCP/IP and TLS/SSL protocols, an Integrated Services Digital Network (ISDN) standard, etc. In some embodiments, the communication interface 650 may include one or more of a Local Area Network (LAN) card, a cable modem, a satellite modem, a data bus, a cable, a wireless communication channel, a radio-based communication channel, a cellular communication channel, an Internet Protocol (IP) based communication device, or other communication devices for wired and/or wireless communications. In some embodiments, the communication interface 650 may be based on public cloud infrastructure, private cloud infrastructure, and hybrid public/private cloud infrastructure.

The memory 640 may store processor-executable instructions and data. The computer executable instructions and data may include a consensus algorithm 642. The consensus algorithm 642, when executed by the processor 620, allows the device 600 to perform operations such as to form a consensus group with other nodes in the blockchain system, generating a partial signature for a transaction, broadcasting the partial signature to other nodes of the consensus group in the blockchain system, verifying partial signatures provided by the other nodes, and determining whether multi-signature is completed by comparing a cumulative signature score with a signature threshold, etc.

The memory 640 may further store a private key 644. The private key 644 may be a secure random number generated by the processor 620, or a secret number designated by the owner of the device 600. The private key 644 may be paired with a public key that is saved in the memory 640.

The memory 640 may be any type of volatile or non-volatile memory devices, or a combination thereof, such as a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, or a magnetic or optical disk.

The user interface 630 may include a display configured to display a progress of performing multi-signature on a transaction, an input device to transmit user command to the processor 620, etc. The display may include, but is not limited to, cathode ray tube (CRT), liquid crystal display (LCD), light-emitting diode (LED), gas plasma, a touch screen, or other image projection devices for displaying information to a user. The input device may be any type of computer hardware equipment used to provide data and control signals from a user to the processor 620. The input device may include, but is not limited to, a keyboard, a mouse, a scanner, a digital camera, a joystick, a trackball, cursor direction keys, a touchscreen monitor, or audio/video commanders, etc.

In some embodiments, the device 600 may host only one node, such as the node 102 of FIG. 1, in a blockchain system. In some embodiments, the device 600 may host more than one node, thereby reducing the hardware cost for a blockchain system. For example, the device 600 may host several different nodes that belong to the same organization.

FIG. 7 is a schematic diagram of an apparatus 700 for validating a transaction in a blockchain system, according to an embodiment. For example, the apparatus 700 may operate as a node, such as the node 102 of FIG. 1, in a blockchain system. Also, for example, the apparatus 700 may be an implementation of a software process, and may correspond to the method 300 (FIG. 3). Referring to FIG. 7, the apparatus 700 may include a verifying module 706 and a validating module 708.

In some embodiments, the verifying module 706 may verify a partial signature for the transaction, such as a first partial signature and a second partial signature for the transaction. The validating module 708 may validate the transaction in response to a determination that a cumulative signature score based on a partial signature for the transaction, such as the first partial signature and the second partial signature, reaches a signature threshold.

In some embodiments, the apparatus 700 may also include a signing module 702 and a broadcasting module 704. The signing module 702 may provide a partial signature for the transaction, such as the first partial signature. The broadcasting module 704 may broadcast the partial signature in the blockchain system.

Each of the above described modules may be implemented as software, or hardware, or a combination of software and hardware. For example, each of the above described modules may be implemented using a processor executing instructions stored in a memory. Also, for example, each the above described modules may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the described methods. Further for example, each of the above described modules may be implemented by using a computer chip or an entity, or implemented by using a product having a certain function. In one embodiment, the apparatus 700 may be a computer, and the computer may be a personal computer, a laptop computer, a cellular phone, a camera phone, a smartphone, a personal digital assistant, a media player, a navigation device, an email receiving and sending device, a game console, a tablet computer, a wearable device, or any combination of these devices.

For an implementation process of functions and roles of each module in the apparatus 700, references can be made to corresponding steps in the above-described methods. Details are omitted here for simplicity.

In an embodiment, there is also provided a computer program product. The computer program product may include a non-transitory computer-readable storage medium having computer-readable program instructions thereon for causing a processor to carry out the above-described methods.

The computer-readable storage medium may be a tangible device that can store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a random access memory (RAM), a read-only memory (ROM), an erasable programmable read-only memory (EPROM), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing.

The computer-readable program instructions for carrying out the above-described methods may be assembler instructions, instruction-set-architecture (ISA) instructions, machine instructions, machine-dependent instructions, microcode, firmware instructions, state-setting data, or source code or object code written in any combination of one or more programming languages, including an object-oriented programming language, and conventional procedural programming languages. The computer-readable program instructions may execute entirely on a computing device as a stand-alone software package, or partly on a first computing device and partly on a second computing device remote from the first computing device. In the latter scenario, the second, remote computing device may be connected to the first computing device through any type of network, including a local area network (LAN) or a wide area network (WAN).

The computer-readable program instructions may be provided to a processor of a general-purpose or special-purpose computer, or other programmable data processing apparatus to produce a machine, such that the instructions, which execute via the processor of the computer or other programmable data processing apparatus, create means for implementing the above-described methods.

The flow charts and diagrams in the figures illustrate the architecture, functionality, and operation of possible implementations of devices, methods, and computer program products according to various embodiments of the specification. In this regard, a block in the flow charts or diagrams may represent a software program, segment, or portion of code, which comprises one or more executable instructions for implementing specific functions. It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the diagrams and/or flow charts, and combinations of blocks in the diagrams and flow charts, may be implemented by special purpose hardware-based systems that perform the specified functions or acts, or combinations of special purpose hardware and computer instructions.

It is appreciated that certain features of the specification, which are, for clarity, described in the context of separate embodiments, may also be provided in combination in a single embodiment. Conversely, various features of the specification, which are, for brevity, described in the context of a single embodiment, may also be provided separately or in any suitable subcombination or as suitable in any other described embodiment of the specification. Certain features described in the context of various embodiments are not essential features of those embodiments, unless noted as such.

Although the specification has been described in conjunction with specific embodiments thereof, it is evident that many alternatives, modifications and variations will be apparent to those skilled in the art. Accordingly, the following claims embrace all such alternatives, modifications and variations that fall within the terms of the claims.

## Claims

1. A computer-implemented method (300) for validating a transaction in a blockchain system comprising a plurality of nodes, the method comprising:
providing (320) a partial signature for the transaction by a node in the blockchain system;
broadcasting (330) the partial signature to all other nodes in the blockchain system verifying (340), at each of the other nodes, the partial signature for the transaction; and
validating (360) the transaction by iteratively providing (320), broadcasting (330) and verifying (340) partial signatures provided by the other nodes in the blockchain system until it has been determined that a cumulative signature score based on the verified partial signatures reaches a signature threshold.

2. The method of claim 1, further comprising:
generating (410) a hash value for the transaction; and
encrypting (420) the generated hash value with a private key to generate the partial signature.

3. The method of any one of claims 1-2, further comprising:
decrypting (510) the partial signature to obtain a first hash value;
generating (520) a second hash value for the transaction; and
determining (540) the partial signature to be valid if the obtained first hash value matches the generated second hash value.

4. The method of claim 3, further comprising:
determining (550) the partial signature to be invalid if the obtained first hash value does not match the generated second hash value.

5. The method of any one of claims 1-4, further comprising:
determining that the cumulative signature score reaches the signature threshold when the cumulative signature score is equal to or greater than a predetermined threshold weightage value.

6. The method of any one of claims 1-5, wherein a weightage value is assigned to each partial signature generated by a node in the blockchain system, wherein different weightage values are assigned to a partial signature provided by a first node and a partial signature provided by a second node, the method further comprising:
obtaining the cumulative signature score by determining a sum of weightage values corresponding to the verified partial signatures, respectively.

7. The method of any one of claims 1-4, further comprising:
determining that the cumulative signature score reaches the signature threshold when a number of nodes (212, 214, 216, 218) providing partial signatures in the blockchain system is equal to or greater than a predetermined threshold number.

8. A device (600) for validating a transaction in a blockchain system, the device comprising:
one or more processors (620); and
one or more computer-readable memories (640) coupled to the one or more processors (620) and having instructions stored thereon that are executable by the one or more processors (620) to perform the method of any one of claims 1 to 7.

9. A computer-readable medium having stored therein instructions that, when executed by a processor (620) of a device (600), cause the device to perform the method of any one of claims 1 to 7.

## Patentansprüche

1. Computerimplementiertes Verfahren (300) zur Validierung einer Transaktion in einem Blockchain-System, das eine Vielzahl von Knoten umfasst, wobei das Verfahren umfasst:
Bereitstellen (320) einer Teilsignatur für die Transaktion durch einen Knoten in dem Blockchain-System;
Rundsenden (330) der Teilsignatur an alle anderen Knoten in dem Blockchain-System;
Verifizieren (340), an jedem der anderen Knoten, der Teilsignatur für die Transaktion; und
Validieren (360) der Transaktion durch iteratives Bereitstellen (320), Rundsenden (330) und Verifizieren (340) von Teilsignaturen, die von den anderen Knoten in dem Blockchain-System bereitgestellt werden, bis bestimmt wurde, dass eine kumulative Signaturbewertung basierend auf den verifizierten Teilsignaturen einen Signaturschwellenwert erreicht.

2. Verfahren nach Anspruch 1, weiter umfassend:
Erzeugen (410) eines Hash-Wertes für die Transaktion; und
Verschlüsseln (420) des erzeugten Hash-Wertes mit einem privaten Schlüssel, um die Teilsignatur zu erzeugen.

3. Verfahren nach einem der Ansprüche 1-2, weiter umfassend:
Entschlüsseln (510) der Teilsignatur, um einen ersten Hash-Wert zu erhalten;
Erzeugen (520) eines zweiten Hash-Wertes für die Transaktion; und
Bestimmen (540), dass die Teilsignatur gültig ist, wenn der erhaltene erste Hash-Wert mit dem erzeugten zweiten Hash-Wert übereinstimmt.

4. Verfahren nach Anspruch 3, weiter umfassend:
Bestimmen (550), dass die Teilsignatur ungültig ist, wenn der erhaltene erste Hash-Wert nicht mit dem erzeugten zweiten Hash-Wert übereinstimmt.

5. Verfahren nach einem der Ansprüche 1-4, weiter umfassend:
Bestimmen, dass die kumulative Signaturbewertung den Signaturschwellenwert erreicht, wenn die kumulative Signaturbewertung gleich oder größer als ein vorbestimmter Gewichtungsschwellenwert ist.

6. Verfahren nach einem der Ansprüche 1-5, wobei jeder von einem Knoten in dem Blockchain-System erzeugten Teilsignatur ein Gewichtungswert zugeordnet wird, wobei einer von einem ersten Knoten bereitgestellten Teilsignatur und einer von einem zweiten Knoten bereitgestellten Teilsignatur unterschiedliche Gewichtungswerte zugeordnet werden, wobei das Verfahren weiter umfasst:
Erhalten der kumulativen Signaturbewertung durch Bestimmen einer Summe von Gewichtungswerten, die jeweils den verifizierten Teilsignaturen entsprechen.

7. Verfahren nach einem der Ansprüche 1-4, weiter umfassend:
Bestimmen, dass die kumulative Signaturbewertung den Signaturschwellenwert erreicht, wenn eine Anzahl von Knoten (212, 214, 216, 218), die Teilsignaturen in dem Blockchain-System bereitstellen, gleich oder größer als eine vorbestimmte Schwellenanzahl ist.

8. Vorrichtung (600) zur Validierung einer Transaktion in einem Blockchain-System, wobei die Vorrichtung umfasst:
einen oder mehrere Prozessoren (620); und
einen oder mehrere computerlesbare Speicher (640), die mit dem einen oder den mehreren Prozessoren (620) gekoppelt sind und auf denen Anweisungen gespeichert sind, die von dem einen oder den mehreren Prozessoren (620) ausgeführt werden können, um das Verfahren nach einem der Ansprüche 1 bis 7 durchzuführen.

9. Computerlesbares Medium mit darauf gespeicherten Anweisungen, die, wenn sie von einem Prozessor (620) einer Vorrichtung (600) ausgeführt werden, die Vorrichtung veranlassen, das Verfahren nach einem der Ansprüche 1 bis 7 durchzuführen.

## Revendications

1. Procédé (300) mis en oeuvre par ordinateur pour valider une transaction dans un système à chaîne de blocs comprenant une pluralité de noeuds, le procédé comprenant :
une fourniture (320) d'une signature partielle pour la transaction par un noeud dans le système à chaîne de blocs ;
une diffusion (330) de la signature partielle à tous les autres noeuds dans le système à chaîne de blocs ;
une vérification (340), au niveau de chacun des autres noeuds, de la signature partielle pour la transaction ; et
une validation (360) de la transaction par fourniture (320), diffusion (330) et vérification (340) itératives de signatures partielles fournies par les autres noeuds dans le système à chaîne de blocs jusqu'à ce qu'il soit déterminé qu'un score de signature cumulé basé sur les signatures partielles vérifiées atteint un seuil de signature.

2. Procédé selon la revendication 1, comprenant en outre :
une génération (410) d'une valeur de hachage pour la transaction ; et
un chiffrement (420) de la valeur de hachage générée avec une clé privée pour générer la signature partielle.

3. Procédé selon l'une quelconque des revendications 1 à 2, comprenant en outre :
un déchiffrement (510) de la signature partielle pour obtenir une première valeur de hachage ;
une génération (520) d'une deuxième valeur de hachage pour la transaction ; et
une détermination (540) que la signature partielle est valide si la première valeur de hachage obtenue correspond à la deuxième valeur de hachage générée.

4. Procédé selon la revendication 3, comprenant en outre :
une détermination (550) que la signature partielle est invalide si la première valeur de hachage obtenue ne correspond pas à la deuxième valeur de hachage générée.

5. Procédé selon l'une quelconque des revendications 1 à 4, comprenant en outre :
une détermination que le score de signature cumulé atteint le seuil de signature lorsque le score de signature cumulé est égal ou supérieur à une valeur de pondération seuil prédéterminée.

6. Procédé selon l'une quelconque des revendications 1 à 5, dans lequel une valeur de pondération est attribuée à chaque signature partielle générée par un noeud dans le système à chaîne de blocs, dans lequel des valeurs de pondération différentes sont attribuées à une signature partielle fournie par un premier noeud et à une signature partielle fournie par un deuxième noeud, le procédé comprenant en outre :
une obtention du score de signature cumulé par détermination d'une somme de valeurs de pondération correspondant aux signatures partielles vérifiées, respectivement.

7. Procédé selon l'une quelconque des revendications 1 à 4, comprenant en outre :
une détermination que le score de signature cumulé atteint le seuil de signature lorsqu'un nombre de noeuds (212, 214, 216, 218) fournissant des signatures partielles dans le système à chaîne de blocs est égal ou supérieur à un nombre seuil prédéterminé.

8. Dispositif (600) pour valider une transaction dans un système à chaîne de blocs, le dispositif comprenant :
un ou plusieurs processeurs (620) ; et
une ou plusieurs mémoires (640) lisibles par ordinateur couplées aux un ou plusieurs processeurs (620) et sur lesquelles sont stockées des instructions qui sont exécutables par les un ou plusieurs processeurs (620) pour effectuer le procédé selon l'une quelconque des revendications 1 à 7.

9. Support lisible par ordinateur sur lequel sont stockées des instructions qui, lorsqu'exécutées par un processeur (620) d'un dispositif (600), amènent le dispositif à effectuer le procédé selon l'une quelconque des revendications 1 à 7.
